(19) Europäisches Patentamt / European Patent Office / Office européen des brevets

(11) **EP 2 619 431 B1**

(12) **FASCICULE DE BREVET EUROPEEN**

(45) Date de publication et mention de la délivrance du brevet:
**11.03.2020 Bulletin 2020/11**

(21) Numéro de dépôt: **11773071.3**

(22) Date de dépôt: **13.09.2011**

(51) Int Cl.:
*F02D 41/18* (2006.01)  *F02D 41/00* (2006.01)
*F02D 9/02* (2006.01)  *F02B 29/04* (2006.01)
*G01F 1/76* (2006.01)  *G01F 1/88* (2006.01)
*F02M 26/03* (2016.01)  *F02M 26/21* (2016.01)
*F02M 26/47* (2016.01)  *F02M 26/71* (2016.01)
*F02M 35/10* (2006.01)

(86) Numéro de dépôt international:
**PCT/FR2011/052087**

(87) Numéro de publication internationale:
**WO 2012/038639 (29.03.2012 Gazette 2012/13)**

(54) **PROCEDE ET DISPOSITIF DE DETERMINATION DU DEBIT D'AIR ENTRANT DANS LE COLLECTEUR D'ADMISSION D'UN MOTEUR A COMBUSTION INTERNE**

VERFAHREN UND VORRICHTUNG ZUM BESTIMMEN DES LUFTMENGENSTROMS IN DIE SAUGLEITUNG EINER BRENNKRAFTMASCHINE

METHOD AND APPARATUS OF DETERMINATION OF THE INCOMING AIR FLOW IN THE INTAKE PIPE OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2010 FR 1057617**

(43) Date de publication de la demande:
**31.07.2013 Bulletin 2013/31**

(73) Titulaire: **Valeo Systèmes de Contrôle Moteur 95800 Cergy Saint Christophe (FR)**

(72) Inventeurs:
• **POTTEAU, Sébastien F-78510 Triel Sur Seine (FR)**
• **VOGEL, Jean-Bastien F-95630 Meriel (FR)**
• **LUTZ, Philippe F-78100 Le Vesinet (FR)**
• **FOURNIGAULT, Damien F-78700 Conflans-sainte-honorine (FR)**

(74) Mandataire: **Ipside 6, Impasse Michel Labrousse 31100 Toulouse (FR)**

(56) Documents cités:
WO-A2-97/35106   WO-A2-2010/010246
DE-A1-102007 010 501   DE-A1-102007 021 414
FR-A1- 2 872 220   FR-A1- 2 905 986
FR-A1- 2 910 929   FR-A1- 2 917 784
FR-A1- 2 927 368   US-A1- 2008 208 432

**Description**

L'invention concerne principalement un procédé pour déterminer le débit d'air entrant dans le collecteur d'admission d'un moteur à combustion interne.

L'invention porte également sur un dispositif pour mettre en œuvre un tel procédé.

Certaines phases de fonctionnement d'un moteur à combustion interne de véhicule automobile, notamment d'un moteur à essence, nécessitent l'augmentation de la puissance du moteur qui fonctionne alors en régime de suralimentation.

En régime normal, mais surtout en régime de suralimentation, le dosage air-essence qui est envoyé dans le moteur doit être caractérisé et contrôlé afin d'éviter l'injection excessive d'essence provoquant l'émission d'espèces gazeuses polluantes.

Par ailleurs, toujours dans un souci de dépollution, on équipe aujourd'hui couramment les moteurs à combustion interne de circuits de recirculation des gaz d'échappement du moteur dans le collecteur d'échappement de ce dernier. Une telle recirculation, appelée également circuit EGR pour Exhaust Gaz Recirculation, permet de diminuer l'émission d'oxydes d'azote du moteur.

De plus, dans le but de réduire le volume de la ligne d'admission du moteur, on sait implanter un échangeur de chaleur du type échangeur d'air refroidi par eau dans le collecteur d'admission. Cet échangeur est usuellement dénommé WCAC pour Water Charged Air Cooler.

L'invention se situe donc dans le contexte d'un moteur susceptible de fonctionner en régime de suralimentation, dont la ligne d'admission comporte d'une part un circuit de recirculation des gaz d'échappement du moteur dans le collecteur d'admission, et d'autre part un échangeur d'air refroidi par eau implanté dans le collecteur d'admission.

Pour caractériser et contrôler la quantité et la nature des espèces gazeuses introduites dans le collecteur d'admission, il est connu d'utiliser un débitmètre d'air pour évaluer la quantité d'air envoyé dans le moteur et un débitmètre au niveau du circuit de recirculation des gaz permettant d'évaluer la quantité de gaz recyclés. Mais l'utilisation de débitmètres est une solution trop couteuse.

La demande de brevet WO 2010/010246 A2 calcule le montant d'air frais autour d'un papillon dans le conduit d'entrée d'air à l'aide la formule de Barré Saint-Venant.

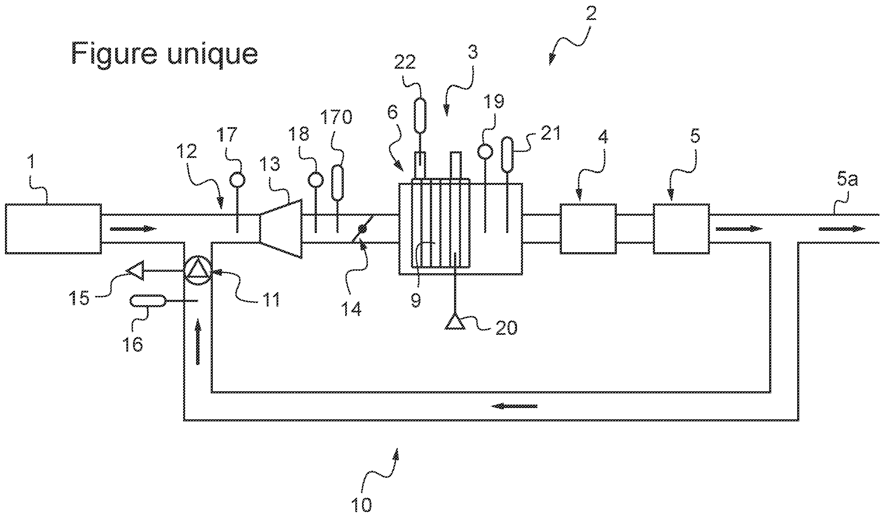

La demande de brevet US 2008/208432 A1 est un exemple d'un dispositif similaire à celui du mode de réalisation de la figure unique.

Dans ce contexte, la présente invention vise à caractériser et à contrôler la quantité et la nature des espèces gazeuses, air frais et gaz recyclés, circulant dans la ligne d'admission et ce, en utilisant des moyens de caractérisation peu couteux. Plus particulièrement, on cherche à connaître la quantité d'air frais entrant dans le collecteur d'admission afin de maîtriser la richesse du mélange air-essence introduit dans le moteur, en particulier lors des phases transitoires soumises à un régime de suralimentation.

A cet effet, le procédé de l'invention permet de déterminer le débit massique d'air frais entrant dans le collecteur d'admission d'un moteur à combustion interne équipé d'un circuit de recirculation des gaz d'échappement du moteur dans le dit collecteur d'admission, lequel circuit de recirculation est équipé d'une vanne de régulation des gaz recyclés, lequel collecteur d'admission intègre un échangeur d'air refroidi par eau et en amont duquel collecteur d'admission se trouve une vanne de régulation du débit des gaz entrant dans le dit collecteur d'admission. Le procédé de l'invention est **caractérisé en ce qu'il** comprend au moins les étapes de :

- détermination du débit massique des gaz recyclés entrant dans le collecteur d'admission, et
- détermination du débit massique de gaz recyclés et d'air frais entrant dans le collecteur d'admission comprenant les étapes de :

  - détermination de la température des gaz en amont de la vanne de régulation des gaz entrant dans le collecteur d'admission,
  - détermination de la pression des gaz en amont de la vanne de régulation des gaz entrant dans le collecteur d'admission,
  - détermination de la pression des gaz en aval de la vanne de régulation du débit des gaz entrant dans le collecteur d'admission,
  - application de la formule suivante :

$$Qth = S.\frac{Pa}{\sqrt{rTa}}\sqrt{\frac{2\gamma}{\gamma-1}\left[\left(\frac{Pb}{Pa}\right)^{\frac{2}{\gamma}}-\left(\frac{Pb}{Pa}\right)^{\frac{\gamma+1}{\gamma}}\right]}$$

Ou S est la section de passage des gaz au niveau de la vanne de régulation du débit des gaz entrant dans le collecteur d'admission,

$T_A$ est la température des gaz en amont de la vanne de régulation des gaz entrant dans le collecteur d'admission (3) $P_A$ est la pression des gaz en amont de la vanne de régulation (14) des gaz entrant dans le collecteur d'admission,

$P_B$ est la pression des gaz en aval de la vanne de régulation des gaz entrant dans le collecteur d'admission,

r est la constante des gaz, de l'ordre de 287,

$\gamma$ est le gamma des gaz, de l'ordre de 1,37, et

- détermination du débit massique d'air entrant dans le collecteur d'admission par différence entre le débit massique de gaz entrant dans le collecteur d'admission déterminé à l'étape précédente et le débit massique de gaz recyclé entrant dans le collecteur d'admission déterminé lors de la première étape.

Le procédé de l'invention peut également comporter les caractéristiques optionnelles suivantes considérées isolément ou selon toutes les combinaisons techniques possibles :

- l'étape de détermination de la pression des gaz en aval de la vanne de régulation des gaz entrant dans le collecteur d'admission comprend au moins les étapes de :

  ○ détermination de la pression dans le collecteur d'admission,
  ○ détermination de la perte de charge induite par l'échangeur d'air refroidi par eau, et
  ○ détermination de la pression des gaz en aval de la vanne de régulation par addition de la pression dans le collecteur d'admission et de la perte de charge induite par l'échangeur d'air refroidi par eau

- l'étape de détermination du débit massique des gaz recyclés entrant dans le collecteur d'admission comporte au moins les étapes de :

  ○ détermination de la température des gaz en amont de la vanne de régulation des gaz recyclés,
  ○ détermination de la pression des gaz en amont de la vanne de régulation des gaz recyclés,
  ○ détermination de la pression des gaz en aval de la vanne de régulation des gaz recyclés,
  ○ application de la formule suivante :

$$Qegr = S.\frac{Pe}{\sqrt{rTe}}\sqrt{\frac{2\gamma}{\gamma-1}\left[\left(\frac{Pf}{Pe}\right)^{\frac{2}{\gamma}}-\left(\frac{Pf}{Pe}\right)^{\frac{\gamma+1}{\gamma}}\right]}$$

Où S est la section de passage des gaz au niveau de la vanne de régulation des gaz recyclés,
  ○ $T_e$ est la température des gaz en amont de la vanne de régulation des gaz recyclés,
  ○ $P_e$ est la pression des gaz en amont de la vanne de régulation des gaz recyclés,
  ○ $P_f$ est la pression des gaz en aval de la vanne de régulation des gaz recyclés,
  ○ r est la constante des gaz, de l'ordre de 287,
  ○ $\gamma$ est le gamma des gaz, de l'ordre de 1,37,

- la détermination de la pression des gaz en amont de la vanne de régulation des gaz recyclés comprend au moins les étapes de :

  ○ détermination de la pression en aval de la vanne de régulation des gaz recyclés,
  ○ détermination de la différence de pression aux bornes de la vanne de régulation des gaz recyclés, et

∘ détermination de la pression des gaz en amont de la vanne de régulation des gaz recyclés par addition de la pression en aval de la vanne de régulation des gaz recyclés et de la différence de pression aux bornes de la vanne de régulation des gaz recyclés.

- on détermine en outre la masse des gaz dans le collecteur d'admission en appliquant la loi des gaz parfaits

$$P_C V_C = nRT_C$$

Ou $P_C$ est la pression dans le collecteur d'admission,
$V_C$ est le volume du collecteur d'admission,
n est la quantité de matière dans le collecteur d'admission,
R est la constante des gaz parfaits, et
Tc est une évaluation de la température dans le collecteur d'admission,
et la masse des gaz dans le collecteur d'admission est déduite de la quantité de matière dans le collecteur d'admission.

- l'évaluation de la température dans le collecteur d'admission est effectuée soit par la mesure directe de la température dans le collecteur d'admission, soit à partir de la température prise dans le circuit d'eau de l'échangeur d'air refroidi par eau.
- pour ce dernier cas la mesure de la température en amont de l'échangeur d'air et la température dans le circuit d'eau de l'échangeur d'air refroidi par eau (6), et la connaissance de l'efficacité de l'échangeur d'air refroidi par eau permet d'évaluer par calcul la température dans le collecteur d'admission.
- on mesure la température dans le collecteur d'admission et la température dans le circuit d'eau de l'échangeur d'air refroidi par eau, l'efficacité de l'échangeur d'air refroidi par eau est évaluée à partir de ces deux températures.

L'invention porte également sur un dispositif mettant en œuvre le procédé précédemment décrit pour déterminer le débit massique d'air frais entrant dans le collecteur d'admission d'un moteur à combustion interne équipé d'un circuit de recirculation des gaz d'échappement du moteur dans le dit collecteur d'admission, lequel circuit de recirculation est équipé d'une vanne de régulation des gaz recyclés, lequel collecteur d'admission intègre un échangeur d'air refroidi par eau et en amont duquel collecteur d'admission se trouve une vanne de régulation des gaz entrant dans le dit collecteur d'admission. Ce dispositif est caractérisé en ce qu'il comporte au moins :

- des moyens de détermination du débit massique des gaz recyclés entrant dans le collecteur d'admission,
- des moyens de détermination de la température des gaz en amont de la vanne de régulation des gaz entrant dans le collecteur d'admission,
- des moyens de détermination de la pression des gaz en amont de la vanne de régulation des gaz entrant dans le collecteur d'admission,
- des moyens de détermination de la pression des gaz en aval de la vanne de régulation du débit des gaz entrant dans le collecteur d'admission,
- des moyens de détermination du débit massique de gaz recyclés et d'air frais entrant dans le collecteur d'admission par application de la formule suivante :

$$Qth = S.\frac{Pa}{\sqrt{rTa}}\sqrt{\frac{2\gamma}{\gamma-1}\left[\left(\frac{Pb}{Pa}\right)^{\frac{2}{\gamma}}-\left(\frac{Pb}{Pa}\right)^{\frac{\gamma+1}{\gamma}}\right]}$$

Où S est la section de passage des gaz au niveau de la vanne de régulation,
$T_a$ est la température des gaz en amont de la vanne de régulation des gaz entrant dans le collecteur d'admission,
$P_a$ est la pression des gaz en amont de la vanne de régulation des gaz entrant dans le collecteur d'admission,
$P_b$ est la pression des gaz en amont de la vanne de régulation du débit des gaz entrant dans le collecteur d'admission,
r est la constante des gaz, de l'ordre de 287
$\gamma$ est le gamma des gaz, de l'ordre de 1,37, et

- des moyens de détermination du débit massique d'air entrant dans le collecteur d'admission par différence entre le débit massique de gaz entrant dans le collecteur d'admission déterminé à l'étape précédente et le débit massique de gaz recyclé entrant dans le collecteur d'admission déterminé lors de la première étape.

Le dispositif de l'invention peut également comporter les caractéristiques optionnelles suivantes considérées isolément ou selon toutes les combinaisons techniques possibles :

- les moyens de détermination de la pression des gaz en aval de la vanne de régulation des gaz entrant dans le collecteur d'admission comprennent :

  ◦ des moyens de détermination de la pression dans le collecteur d'admission,
  ◦ des moyens de détermination de la perte de charge induite par l'échangeur d'air refroidi par eau, et
  ◦ des moyens de détermination de la pression des gaz en aval de la vanne de régulation par addition de la pression dans le collecteur d'admission et de la perte de charge induite par l'échangeur d'air refroidi par eau.

- Le dispositif comporte en outre :

  ◦ un thermocouple pour déterminer la température des gaz en amont de la vanne de régulation des gaz entrant dans le collecteur d'admission,
  ◦ un capteur de pression pour déterminer la pression des gaz en amont de la vanne de régulation du débit de gaz entrant dans le collecteur d'admission,
  ◦ un capteur de pression pour déterminer la pression des gaz dans le collecteur d'admission,

  et l'évolution de la perte de charge induite par l'échangeur d'air refroidi par eau est cartographiée.
- les moyens permettant la détermination du débit massique des gaz recyclés entrant dans le collecteur d'admission comportent :

  ◦ des moyens de détermination de la température des gaz en amont de la vanne de régulation des gaz recyclés,
  ◦ des moyens de détermination de la pression des gaz en amont de la vanne de régulation des gaz recyclés,
  ◦ des moyens de détermination de la pression des gaz en aval de la vanne de régulation des gaz recyclés,
  ◦ des moyens de détermination du débit des gaz recyclés par application de la formule suivante :

$$Qegr = S.\frac{Pe}{\sqrt{rTe}}\sqrt{\frac{2\gamma}{\gamma-1}\left[\left(\frac{Pf}{Pe}\right)^{\frac{2}{\gamma}}-\left(\frac{Pf}{Pe}\right)^{\frac{\gamma+1}{\gamma}}\right]}$$

  Où S est la section de passage des gaz au niveau de la vanne de régulation des gaz recyclés,
  $T_E$ est la température des gaz en amont de la vanne de régulation des gaz recyclés,
  $P_E$ est la pression des gaz en amont de la vanne de régulation des gaz recyclés,
  $P_F$ est la pression des gaz en aval de la vanne de régulation des gaz recyclés,
  r est la constante des gaz, de l'ordre de 287,
  $\gamma$ est le gamma des gaz, de l'ordre de 1,37.

- les moyens de détermination de la pression des gaz en amont de la vanne de régulation des gaz recyclés comportent au moins :

  ◦ des moyens de détermination de la différence de pression aux bornes de la vanne de régulation des gaz recyclés, et
  ◦ des moyens de détermination de la pression des gaz en amont de la vanne de régulation des gaz recyclés par addition de la pression des gaz en aval de la vanne de régulation des gaz recyclés et de la différence de pression aux bornes de la vanne de régulation des gaz recyclés.

- le dispositif comporte en outre :

  ◦ un thermocouple en amont de la vanne de régulation des débits de gaz recyclés pour déterminer la température des gaz en amont de la vanne de régulation des gaz recyclés,
∘ un capteur de pression en aval de la vanne de régulation des débits de gaz recyclés pour déterminer la pression des gaz en aval de la vanne de régulation des gaz recyclés, et
∘ un capteur de la différence de pression aux bornes de la vanne de régulation des débits de gaz recyclés.

- le dispositif comporte en outre :

∘ un capteur de température pour déterminer la température dans le collecteur d'admission,
∘ des moyens de détermination de la masse des gaz dans le collecteur d'admission en appliquant la loi des gaz parfaits

$$P_C V_C = n R T_C$$

Ou

$P_C$ est la pression ($P_C$) dans le collecteur d'admission,
$V_C$ est le volume du collecteur d'admission,
n est la quantité de matière dans le collecteur d'admission,
R est la constante des gaz parfaits, et
Tc est la température dans le collecteur d'admission,
et en déduisant la masse des gaz dans le collecteur d'admission de la quantité de matière dans le collecteur d'admission.

- les moyens d'évaluation de la température dans le collecteur d'admission sont constitués soit d'un capteur de température situé dans le collecteur d'admission donnant la température dans le collecteur d'admission, soit par la mesure de la température en amont de l'échangeur d'air et la température dans le circuit d'eau de l'échangeur d'air refroidi par eau (6), et la connaissance de l'efficacité de l'échangeur d'air refroidi par eau permet d'évaluer par calcul la température dans le collecteur d'admission.
- le dispositif comporte au moins :

∘ un thermocouple en amont de la vanne de régulation des débits de gaz recyclés pour déterminer la température des gaz en amont de la vanne de régulation des gaz recyclés,
∘ un capteur de pression en aval de la vanne de régulation des débits de gaz recyclés pour déterminer la pression des gaz en aval de la vanne de régulation des gaz recyclés, et
∘ un capteur de la différence de pression aux bornes de la vanne de régulation des débits de gaz recyclés.

- le dispositif comporte :

∘ un capteur de température dans le collecteur d'admission donnant la température dans le collecteur d'admission,
∘ un thermocouple dans le circuit d'eau de l'échangeur d'air refroidi par eau donnant la température dans le circuit d'eau de l'échangeur d'air refroidi par eau,
∘ des moyens d'évaluation de l'efficacité de l'échangeur d'air refroidi par eau à partir de ces deux températures.

D'autres caractéristiques et avantages de l'invention ressortiront clairement de la description qui en est donnée ci-dessous, à titre indicatif et nullement limitatif, en référence à la figure unique annexée sur laquelle est représenté schématiquement le dispositif de l'invention.

En référence à cette figure, le dispositif de l'invention comporte un dispositif d'entrée et de filtration de l'air frais 1, admis dans un moteur à combustion interne 2, de préférence, mais non exclusivement, de type à essence.

Le moteur à combustion interne 2 est schématisé en trois blocs 3,4,5 représentant respectivement son collecteur d'admission 3, ses cylindres 4 et son collecteur d'échappement 5. Les gaz d'échappement en sortie du collecteur d'échappement 5 circulent dans une canalisation 5a vers un dispositif de post-traitement, par exemple un pot catalytique non représenté sur la figure.

Un échangeur d'air refroidi par eau 6 est implanté dans le collecteur d'admission 3. Cet échangeur comporte principalement un circuit de circulation d'eau 9.

Par ailleurs, le moteur 2 est équipé d'un circuit de recirculation des gaz 10 par lequel une partie des gaz en sortie du collecteur d'échappement 5 sont envoyés dans le collecteur d'admission 3.

Dans le cas d'un circuit basse pression, une vanne trois voies 11 régule le débit des gaz recyclés qui sont injectés dans la ligne d'admission 12 où ils sont mélangés à l'air frais 1. Cette vanne trois voies 11 comporte un volet de vannage non visible permettant d'augmenter le débit des gaz recyclés injectés dans le ligne d'admission 12. Les gaz d'admission constitués d'air frais et de gaz recyclés sont comprimés au moyen d'un compresseur 13, puis introduits dans le collecteur d'admission 3.

Une vanne papillon 14 située entre le compresseur 13 et l'entrée du collecteur d'admission 3, régule le débit des gaz d'admission qui entrent dans ce collecteur d'admission 3.

Pour déterminer la quantité d'air qui entre dans le collecteur d'admission 3, on détermine d'abord le débit massique des gaz recyclés $D_2$ entrant dans le collecteur d'admission 3, ce qui revient à déterminer le débit massique des gaz recyclés au niveau de la vanne trois voies 11 du circuit de recirculation des gaz 10.

Pour ce faire, un thermocouple 16 détermine la température $T_E$ des gaz en amont de la vanne trois voies 11 et un capteur de pression 17 mesure la pression en amont du compresseur 13, cette pression sera assimilée à la pression $P_F$ des gaz en aval de la vanne trois voies 11.

Par ailleurs, la différence de pression $\Delta P_G$ aux bornes de la vanne trois voies 11 est mesurée par un capteur spécifique de différence de pression 15.

La connaissance de la différence de pression $\Delta P_G$ et de la pression $P_F$ des gaz en aval de la vanne trois voies 11 permettent, par addition de ces deux mesures $\Delta P_G$, $P_F$, de déterminer la pression $P_E$ en amont de la vanne trois voies 11.

On applique alors la formule de Saint Venant permettant de déterminer le débit massique des gaz recyclés $D_2$ selon :

$$Qegr = S.\frac{Pe}{\sqrt{rTe}}\sqrt{\frac{2\gamma}{\gamma-1}\left[\left(\frac{Pf}{Pe}\right)^{\frac{2}{\gamma}} - \left(\frac{Pf}{Pe}\right)^{\frac{\gamma+1}{\gamma}}\right]}$$

Où S est la section de passage des gaz au niveau de la vanne trois voies 11,

$T_e$ est la température des gaz en amont de la vanne trois voies 11,

$P_e$ est la pression des gaz en amont de la vanne trois voies 11,

$P_f$ est la pression des gaz en aval de la vanne trois voies 11,

r est la contante des gaz, de l'ordre de 287,

$\gamma$ est le gamma des gaz, de l'ordre de 1,37.

La section de passage S est rendue connue par la connaissance de la position de la vanne trois voies 11.

Pour déterminer le débit massique des gaz $D_3$, air frais et gaz recyclés, entrant dans le collecteur d'admission 3, un thermocouple 170 mesure la température $T_A$ en amont de la vanne papillon 14 et un capteur de pression 18 qui mesure la pression $P_A$ en amont de la vanne papillon.

Le débit massique des gaz $D_3$ entrant dans le collecteur d'admission 3 est déterminé au niveau de la vanne papillon 14.

Pour ce faire, un capteur de pression 19 mesure la pression $P_C$ dans le collecteur d'admission, et la perte de charge $\Delta P_D$ induite par l'échangeur d'air refroidi par eau 9 est connu par des modèles existants, notamment par cartographie dans la stratégie du contrôle moteur, schématisés par la référence 20. La pression $P_B$ en aval de la vanne papillon est alors obtenue en additionnant la pression $P_C$ dans le collecteur d'admission, et la perte de charge $\Delta P_D$ induite par l'échangeur d'air refroidi par eau 9.

On applique alors la formule de Saint Venant permettant de déterminer le débit massique des gaz $D_3$ entrant dans le collecteur d'admission 3 selon :

$$Qth = S.\frac{Pa}{\sqrt{rTa}}\sqrt{\frac{2\gamma}{\gamma-1}\left[\left(\frac{Pb}{Pa}\right)^{\frac{2}{\gamma}} - \left(\frac{Pb}{Pa}\right)^{\frac{\gamma+1}{\gamma}}\right]}$$

Ou S est la section de passage des gaz au niveau de la vanne papillon 14,

$T_a$ est la température des gaz en amont de la vanne papillon 14,

$P_a$ est la pression des gaz en amont de la vanne papillon 14,

$P_b$ est la pression des gaz en aval de la vanne papillon 14,

r est la constante des gaz, de l'ordre de 287,

$\gamma$ est le gamma des gaz, de l'ordre de 1,37.

La section de passage S est rendue connue par la connaissance de la position de la vanne papillon 14.

Connaissant ainsi le débit des gaz recyclés $D_2$ et le débit des gaz $D_3$ entrant dans le collecteur d'admission 3, on peut déterminer le débit d'air frais $D_1$ entrant dans le collecteur d'admission 3 par différence entre le débit des gaz $D_3$ entrant dans le collecteur d'admission 3 et le débit des gaz recyclés $D_2$.

Dans le cadre de l'invention, la détermination du débit de gaz recyclés $D_2$ peut être obtenue par tous autres moyens adaptés, par exemple au moyen d'un débitmètre. On déterminera alors le débit des gaz $D_3$ entrant dans le collecteur d'admission 3 ainsi que le débit d'air frais $D_1$ entrant dans le collecteur d'admission 3 de la manière que décrit précédemment.

Par ailleurs, on pourra utiliser, au lieu et place de la vanne trois voies 11 du circuit de recirculation de gaz 10 , une vanne classique.

Selon l'invention, on détermine en outre la masse des gaz dans le collecteur d'admission 3.

Pour ce faire, on applique la Loi des gaz parfaits :

$$P_C V_C = nRT_C$$

Où $P_C$ est la pression dans le collecteur d'admission 3,

$V_C$ est le volume du collecteur d'admission 3,

n est la quantité de matière dans le collecteur d'admission 3,

R est la constante des gaz parfaits, et

Tc est une évaluation de la température dans le collecteur d'admission 3.

La masse des gaz dans le collecteur d'admission est déduite de la quantité de matière (n) dans le collecteur d'admission 3.

L'évaluation Tc de la température dans le collecteur d'admission 3 peut être faite soit par la mesure de la température $T_{C1}$ dans le collecteur d'admission 3 au moyen d'un capteur de température 21 disposé dans le collecteur d'admission 3, soit au moyen d'un thermocouple 22 mesurant la température $T_{C2}$ dans le circuit de circulation d'eau 8 de l'échangeur et par la connaissance de l'efficacité de l'échangeur. 6.

Enfin, dans l'exemple de réalisation de la figure annexée, le circuit de gaz est un circuit basse pression. Dans le cadre de l'invention, le circuit peut également être un circuit haute pression, auquel cas la vanne trois voies 3 du circuit de recirculation 10 sera remplacé par une vanne classique.

## Revendications

1. Procédé de détermination du débit massique ($D_1$) d'air frais entrant dans le collecteur d'admission (3) d'un moteur à combustion interne (2) équipé d'un circuit de recirculation des gaz d'échappement (10) du moteur (2) dans le dit collecteur d'admission (3), lequel circuit de recirculation (10) est équipé d'une vanne de régulation des gaz recyclés (11), lequel collecteur d'admission (3) intègre un échangeur d'air refroidi par eau (6) et en amont duquel collecteur d'admission (3) se trouve une vanne de régulation du débit des gaz (14) entrant dans le dit collecteur d'admission (3), **caractérisé en ce qu'il** comprend au moins les étapes de:

   - détermination du débit massique ($D_2$) des gaz recyclés entrant dans le collecteur d'admission (3), et
   - détermination du débit massique (D3) de gaz recyclés et d'air frais entrant dans le collecteur d'admission (3) comprenant les étapes de :

     • détermination de la température ($T_A$) des gaz en amont de la vanne de régulation (14) des gaz entrant dans le collecteur d'admission (3),
     • détermination de la pression ($P_A$) des gaz en amont de la vanne de régulation (14) des gaz entrant dans le collecteur d'admission (3),
     • détermination de la pression ($P_B$) des gaz en aval de la vanne de régulation du débit des gaz (14) entrant dans le collecteur d'admission (3),

• application de la formule suivante

$$D_3 = Qth = S.\frac{Pa}{\sqrt{rTa}}\sqrt{\frac{2\gamma}{\gamma-1}\left[\left(\frac{Pb}{Pa}\right)^{\frac{2}{\gamma}} - \left(\frac{Pb}{Pa}\right)^{\frac{\gamma+1}{\gamma}}\right]}$$

Où S est la section de passage des gaz au niveau de la vanne de régulation (14) du débit des gaz entrant dans le collecteur d'admission (3),

$T_a$ est la température des gaz en amont de la vanne de régulation (14) des gaz entrant dans le collecteur d'admission (3)

$P_a$ est la pression des gaz en amont de la vanne de régulation (14) des gaz entrant dans le collecteur d'admission (3),

$P_b$ est la pression des gaz en aval de la vanne de régulation (14) des gaz entrant dans le collecteur d'admission (3),

r est la constante des gaz,

$\gamma$ est le gamma des gaz, et

- détermination du débit massique d'air ($D_1$) entrant dans le collecteur d'admission (3) par différence entre le débit massique de gaz ($D_3$) entrant dans le collecteur d'admission (3) déterminé à l'étape précédente et le débit massique de gaz recyclé ($D_2$) entrant dans le collecteur d'admission (3) déterminé lors de la première étape.

2.  Procédé selon la revendication 1, **caractérisé en ce que** l'étape de détermination de la pression ($P_B$) des gaz en aval de la vanne de régulation (14) des gaz entrant dans le collecteur d'admission (3) comprend au moins les étapes de :

    - détermination de la pression ($P_C$) dans le collecteur d'admission (3)
    - détermination de la perte de charge ($\Delta P_D$) induite par l'échangeur d'air refroidi par eau (6), et
    - détermination de la pression ($P_B$) des gaz en aval de la vanne de régulation (14) par addition de la pression ($P_C$) dans le collecteur d'admission (3) et de la perte de charge ($\Delta P_D$) induite par l'échangeur d'air refroidi par eau (6).

3.  Procédé selon l'une quelconque des revendications 1 et 2, **caractérisé en ce que** l'étape de détermination du débit massique ($D_2$) des gaz recyclés entrant dans le collecteur d'admission (3) comporte au moins les étapes de :

    - détermination de la température ($T_E$) des gaz en amont de la vanne de régulation des gaz recyclés (11),
    - détermination de la pression ($P_E$) des gaz en amont de la vanne de régulation des gaz recyclés (11),
    - détermination de la pression ($P_F$) des gaz en aval de la vanne de régulation des gaz recyclés (11),
    - application de la formule suivante :

$$D_2 = Qegr = S.\frac{Pe}{\sqrt{rTe}}\sqrt{\frac{2\gamma}{\gamma-1}\left[\left(\frac{Pf}{Pe}\right)^{\frac{2}{\gamma}} - \left(\frac{Pf}{Pe}\right)^{\frac{\gamma+1}{\gamma}}\right]}$$

Où S est la section de passage des gaz au niveau de la vanne de régulation des gaz recyclés (11),

$T_e$ est la température des gaz en amont de la vanne de régulation des gaz recyclés (11),

$P_e$ est la pression des gaz en amont de la vanne de régulation des gaz recyclés (11),

$P_f$ est la pression des gaz en aval de la vanne de régulation des gaz recyclés (11),

r est la constante des gaz

$\gamma$ est le gamma des gaz.

4.  Procédé selon la revendication 3, **caractérisé en ce que** la détermination de la pression ($P_e$) des gaz en amont de la vanne de régulation des gaz recyclés (11) comprend au moins les étapes de :

- détermination de la pression ($P_f$) en aval de la vanne de régulation des gaz recyclés (11),
- détermination de la différence de pression ($\Delta P_G$) aux bornes de la vanne de régulation des gaz recyclés (11), et
- détermination de la pression ($P_e$) des gaz en amont de la vanne de régulation des gaz recyclés (11) par addition de la pression ($P_f$) en aval de la vanne de régulation des gaz recyclés (11) et de la différence de pression ($\Delta P_G$) aux bornes de la vanne de régulation des gaz recyclés (11).

5. Procédé selon l'une quelconque des revendications précédentes, **caractérisé en ce que** l'on détermine en outre la masse des gaz dans le collecteur d'admission en appliquant la loi des gaz parfaits

$$P_c V_c = nRT_c$$

Où $P_C$ est la pression dans le collecteur d'admission (3),
$V_C$ est le volume du collecteur d'admission (3),
n est la quantité de matière dans le collecteur d'admission (3),
R est la constante des gaz parfaits, et
Tc est une évaluation de la température dans le collecteur d'admission (3),
et **en ce que** la masse des gaz dans le collecteur d'admission est déduite de la quantité de matière (n) dans le collecteur d'admission (3).

6. Procédé selon la revendication 5, **caractérisé en ce que** l'évaluation de la température ($T_C$) dans le collecteur d'admission (3) est effectuée soit par la mesure de la température ($T_{C1}$) dans le collecteur d'admission (3), soit à partir de la température ($T_{C2}$) prise dans le circuit d'eau de l'échangeur d'air refroidi par eau (6) et par la connaissance de l'efficacité de l'échangeur.

7. Procédé selon l'une quelconque des revendication 1 à 6, **caractérisé en ce que** l'on mesure la température ($T_{C1}$) dans le collecteur d'admission (3) et la température ($T_{C2}$) dans le circuit d'eau de l'échangeur d'air refroidi par eau (6), et **en ce que** l'efficacité de l'échangeur d'air refroidi par eau (6) est évaluée à partir de ces deux températures ($T_{C1}$ et $T_{C2}$).

8. Dispositif mettant en œuvre le procédé selon l'une quelconque des revendication 1 à 7 pour déterminer le débit massique ($D_1$) d'air frais entrant dans le collecteur d'admission (3) d'un moteur à combustion interne (2) équipé d'un circuit de recirculation des gaz d'échappement (10) du moteur (2) dans le dit collecteur d'admission (3), lequel circuit de recirculation (10) est équipé d'une vanne de régulation des gaz recyclés (11), lequel collecteur d'admission (3) intègre un échangeur d'air refroidi par eau (6) et en amont duquel collecteur d'admission (3) se trouve une vanne de régulation (14) des gaz entrant dans le dit collecteur d'admission (3), **caractérisé en ce qu'**il comporte au moins :

- des moyens de détermination du débit massique des gaz recyclés ($D_2$) entrant dans le collecteur d'admission (3),
- des moyens de détermination de la température ($T_A$) des gaz en amont de la vanne de régulation (14) des gaz entrant dans le collecteur d'admission (3),
- des moyens de détermination de la pression ($P_A$) des gaz en amont de la vanne de régulation (14) des gaz entrant dans le collecteur d'admission (3),
- des moyens de détermination de la pression ($P_B$) des gaz en aval de la vanne de régulation (14) du débit des gaz entrant dans le collecteur d'admission (3),
- des moyens de détermination du débit massique ($D_3$) de gaz recyclés et d'air frais entrant dans le collecteur d'admission (3) par application de la formule suivante :

$$D_3 = Qth = S.\frac{Pa}{\sqrt{rTa}}\sqrt{\frac{2\gamma}{\gamma-1}\left[\left(\frac{Pb}{Pa}\right)^{\frac{2}{\gamma}} - \left(\frac{Pb}{Pa}\right)^{\frac{\gamma+1}{\gamma}}\right]}$$

Où S est la section de passage des gaz au niveau de la vanne de régulation (14),

$T_A$ est la température des gaz en amont de la vanne de régulation (14) des gaz entrant dans le collecteur d'admission (3),

$P_A$ est la pression des gaz en amont de la vanne de régulation (14) des gaz entrant dans le collecteur d'admission (3),

$P_B$ est la pression des gaz en amont de la vanne de régulation (14) du débit des gaz entrant dans le collecteur d'admission (3),

r est la constante des gaz,

$\gamma$ est le gamma des gaz, et

- des moyens de détermination du débit massique d'air ($D_1$) entrant dans le collecteur d'admission (3) par différence entre le débit massique de gaz ($D_3$) entrant dans le collecteur d'admission (3) déterminé à l'étape précédente et le débit massique de gaz recyclé ($D_2$) entrant dans le collecteur d'admission (3) déterminé lors de la première étape.

9. Dispositif selon la revendication 8, **caractérisé en ce que** les moyens de détermination de la pression ($P_b$) des gaz en aval de la vanne de régulation (14) des gaz entrant dans le collecteur d'admission () comprennent :

- des moyens de détermination de la pression ($P_C$) dans le collecteur d'admission (3),
- des moyens de détermination de la perte de charge ($\Delta P_D$) induite par l'échangeur d'air refroidi par eau (6), et
- des moyens de détermination de la pression ($P_b$) des gaz en aval de la vanne de régulation (14) par addition de la pression ($P_C$) dans le collecteur d'admission (3) et de la perte de charge ($\Delta P_D$) induite par l'échangeur d'air refroidi par eau (6).

10. Dispositif selon la revendication 9, **caractérisé en ce qu'**il comporte :

- un thermocouple (16) pour déterminer la température ($T_a$) des gaz en amont de la vanne de régulation (14) des gaz entrant dans le collecteur d'admission (3),
- un capteur de pression (17) pour déterminer la pression ($P_a$) des gaz en amont de la vanne de régulation (14) du débit de gaz entrant dans le collecteur d'admission (3),
- un capteur de pression (19) pour déterminer la pression ($P_b$) des gaz dans le collecteur d'admission (3),

et **en ce que** l'évolution de la perte de charge ($\Delta P_D$) induite par l'échangeur d'air refroidi par eau (6) est cartographiée.

11. Dispositif selon l'une quelconque des revendications 8 à 10, caractérisé ce que les moyens permettant la détermination du débit massique des gaz recyclés entrant dans le collecteur d'admission (3) comportent :

- des moyens de détermination (16) de la température ($T_E$) des gaz en amont de la vanne de régulation des gaz recyclés (11),
- des moyens de détermination de la pression ($P_E$) des gaz en amont de la vanne de régulation des gaz recyclés (11),
- des moyens de détermination (17) de la pression ($P_F$) des gaz en aval de la vanne de régulation des gaz recyclés (11),
- des moyens de détermination du débit massique ($D_2$) des gaz recyclés par application de la formule suivante :

$$D_2 = Qegr = S.\frac{Pe}{\sqrt{rTe}}\sqrt{\frac{2\gamma}{\gamma-1}\left[\left(\frac{Pf}{Pe}\right)^{\frac{2}{\gamma}} - \left(\frac{Pf}{Pe}\right)^{\frac{\gamma+1}{\gamma}}\right]}$$

Où S est la section de passage des gaz au niveau de la vanne de régulation des gaz recyclés (11),

$T_e$ est la température des gaz en amont de la vanne de régulation des gaz recyclés (11),

$P_e$ est la pression des gaz en amont de la vanne de régulation des gaz recyclés (11),

$P_f$ est la pression des gaz en aval de la vanne de régulation des gaz recyclés (11),

r est la constante des gaz,

$\gamma$ est le gamma des gaz.

**12.** Dispositif selon la revendication 11, **caractérisé en ce que** les moyens de détermination de la pression ($P_e$) des gaz en amont de la vanne de régulation des gaz recyclés (11) comportent au moins :

- des moyens de détermination de la différence de pression ($\Delta P_G$) aux bornes de la vanne de régulation des gaz recyclés (11), et
- des moyens de détermination de la pression ($P_e$) des gaz en amont de la vanne de régulation des gaz recyclés (11) par addition de la pression ($P_f$) des gaz en aval de la vanne de régulation des gaz recyclés (11) et de la différence de pression ($\Delta P_G$) aux bornes de la vanne de régulation des gaz recyclés (11).

**13.** Dispositif selon la revendication 12, **caractérisé en ce qu'**il comporte au moins :

- un thermocouple (16) en amont de la vanne de régulation (14) des débits de gaz recyclés pour déterminer la température ($T_e$) des gaz en amont de la vanne de régulation des gaz recyclés (11),
- un capteur de pression (17) en aval de la vanne de régulation (11) des débits de gaz recyclés pour déterminer la pression ($P_f$) des gaz en aval de la vanne de régulation des gaz recyclés (11), et
- un capteur de la différence de pression ($\Delta P_G$) aux bornes de la vanne de régulation (11) des débits de gaz recyclés.

**14.** Dispositif selon l'une quelconque des revendications 8 à 13, **caractérisé en ce qu'**il comporte en outre :

- un capteur de température (21) pour déterminer la température ($T_c$) dans le collecteur d'admission (3),
- des moyens de détermination de la masse des gaz dans le collecteur d'admission (3) en appliquant la loi des gaz parfaits

$$P_c V_c = nRT_c$$

Où $P_c$ est la pression ($P_c$) dans le collecteur d'admission (3),
$V_C$ est le volume du collecteur d'admission (3),
n est la quantité de matière dans le collecteur d'admission (3),
R est la constante des gaz parfaits, et
$T_C$ est la température dans le collecteur d'admission (3),
et en déduisant la masse des gaz dans le collecteur d'admission de la quantité de matière (n) dans le collecteur d'admission (3).

**Patentansprüche**

**1.** Verfahren zur Bestimmung der Massenströmungsrate ($D_1$) von in das Ansaugrohr (3) eines Innenverbrennungsmotors (2) eintretender Frischluft, der mit einem Umwälzkreislauf der Abgase (10) des Motors (2) in dem Ansaugrohr (3) ausgestattet ist, wobei der Umwälzkreislauf der Abgase (10) mit einem Regelventil der recycelten Gase (11) ausgestattet ist, wobei das Ansaugrohr (3) einen wassergekühlten Lufttauscher (6) integriert und sich stromaufwärts des Ansaugrohrs (3) ein Regelventil für die Strömung der in das Ansaugrohr (3) eintretenden Gase (14) befindet, **dadurch gekennzeichnet, dass** es mindestens die folgenden Schritte umfasst:

- Bestimmen der Massenströmungsrate ($D_2$) der in das Ansaugrohr (3) eintretenden recycelten Gase, und
- Bestimmen der Massenströmungsrate ($D_3$) von in das Ansaugrohr (3) eintretenden recycelten Gasen und Frischluft, die folgenden Schritte umfassend:

  • Bestimmen der Temperatur ($T_A$) der Gase stromaufwärts des Regelventils (14) der in das Ansaugrohr (3) eintretenden Gase,
  • Bestimmen des Drucks ($P_A$) der Gase stromaufwärts des Regelventils (14) der in das Ansaugrohr (3) eintretenden Gase,
  • Bestimmen des Drucks ($P_B$) der Gase stromabwärts des Regelventils (14) der in das Ansaugrohr (3) eintretenden Gase,
  • Anwenden der folgenden Formel:

$$D_3 = Qth = S.\frac{Pa}{\sqrt{rTa}}\sqrt{\frac{2\gamma}{\gamma - 1}\left[\left(\frac{Pb}{Pa}\right)^{\frac{2}{\gamma}} - \left(\frac{Pb}{Pa}\right)^{\frac{\gamma+1}{\gamma}}\right]}$$

wo S der Durchgangsquerschnitt der Gase im Bereich des Regelventils (14) der Strömung der in das Ansaugrohr (3) eintretenden Gase ist,

$T_a$ die Temperatur der Gase stromaufwärts des Regelventils (14) der in das Ansaugrohr (3) eintretenden Gase ist,

$P_a$ der Druck der Gase stromaufwärts des Regelventils (14) der in das Ansaugrohr (3) eintretenden Gase ist,

$P_b$ der Druck der Gase stromabwärts des Regelventils (14) der in das Ansaugrohr (3) eintretenden Gase ist,

r die Konstante der Gase ist,

$\gamma$ das Gamma der Gase ist, und

- Bestimmen der Massenströmungsrate ($D_1$) der in das Ansaugrohr (3) eintretenden Luft auf Grundlage der Differenz zwischen der in dem vorstehenden Schritt bestimmten Massenströmungsrate ($D_3$) von in das Ansaugrohr (3) eintretendem Gas und der in dem ersten Schritt bestimmten Massenströmungsrate ($D_2$) von in das Ansaugrohr (3) eintretendem recyceltem Gas.

2. Verfahren nach Anspruch 1, **dadurch gekennzeichnet, dass** der Schritt zum Bestimmen des Drucks ($P_B$) der Gase stromabwärts des Regelventils (14) der in das Ansaugrohr (3) eintretenden Gase mindestens die folgenden Schritte umfasst:

   - Bestimmen des Drucks ($P_c$) in dem Ansaugrohr (3)
   - Bestimmen des durch den wassergekühlten Lufttauscher (6) induzierten Druckverlustes ($\Delta P_D$), und
   - Bestimmen des Drucks ($P_B$) der Gase stromabwärts des Regelventils (14) durch Addieren des Drucks ($P_c$) in dem Ansaugrohr (3) und des durch den wassergekühlten Lufttauscher (6) induzierten Druckverlustes ($\Delta P_D$).

3. Verfahren nach einem der Ansprüche 1 und 2, **dadurch gekennzeichnet, dass** der Schritt des Bestimmens der Massenströmungsrate ($D_2$) der in das Ansaugrohr (3) eintretenden recycelten Gase mindestens die folgenden Schritte beinhaltet:

   - Bestimmen der Temperatur ($T_E$) der Gase stromaufwärts des Regelventils der recycelten Gase (11),
   - Bestimmen des Drucks ($P_E$) der Gase stromaufwärts des Regelventils der recycelten Gase (11),
   - Bestimmen des Drucks ($P_F$) der Gase stromabwärts des Regelventils der recycelten Gase (11),
   - Anwenden der folgenden Formel:

$$D_2 = Qegr = S.\frac{Pe}{\sqrt{rTe}}\sqrt{\frac{2\gamma}{\gamma - 1}\left[\left(\frac{Pf}{Pe}\right)^{\frac{2}{\gamma}} - \left(\frac{Pf}{Pe}\right)^{\frac{\gamma+1}{\gamma}}\right]}$$

wo S der Durchgangsquerschnitt der Gase im Bereich des Regelventils der recycelten Gase (11) ist,

$T_e$ die Temperatur der Gase stromaufwärts des Regelventils der recycelten Gase (11) ist,

$P_e$ der Druck der Gase stromaufwärts des Regelventils der recycelten Gase (11) ist,

$P_f$ der Druck der Gase stromabwärts des Regelventils der recycelten Gase (11) ist,

r die Konstante der Gase ist,

$\gamma$ das Gamma der Gase ist.

4. Verfahren nach Anspruch 3, **dadurch gekennzeichnet, dass** das Bestimmen des Drucks ($P_e$) der Gase stromaufwärts des Regelventils der recycelten Gase (11) mindestens die folgenden Schritte umfasst:

   - Bestimmen des Drucks ($P_f$) stromabwärts des Regelventils der recycelten Gase (11),

- Bestimmen der Druckdifferenz ($\Delta P_G$) an den Klemmen des Regelventils der recycelten Gase (11), und
- Bestimmen des Drucks ($P_e$) der Gase stromaufwärts des Regelventils der recycelten Gase (11) durch Addieren des Drucks ($P_f$) stromabwärts des Regelventils der recycelten Gase (11) und der Druckdifferenz ($\Delta P_G$) an den Klemmen des Regelventils der recycelten Gase (11).

5. Verfahren nach einem der vorstehenden Ansprüche, **dadurch gekennzeichnet, dass** man weiter die Masse der Gase in dem Ansaugrohr bestimmt, indem man das perfekte Gasgesetz anwendet

$$P_c V_c = nRT_c$$

Wo $P_c$ der Druck in dem Ansaugrohr (3) ist,
$V_c$ das Volumen des Ansaugrohrs (3) ist,
n die Materialmenge in dem Ansaugrohr (3) ist,
R die Konstante der perfekten Gase ist, und
$T_c$ eine Bewertung der Temperatur in dem Ansaugrohr (3) ist, und dadurch, dass die Masse der Gase in dem Ansaugrohr aus der Materialmenge (n) in dem Ansaugrohr (3) abgeleitet wird.

6. Verfahren nach Anspruch 5, **dadurch gekennzeichnet, dass** die Bewertung der Temperatur ($T_c$) in dem Ansaugrohr (3) entweder durch das Messen der Temperatur ($T_{c1}$) in dem Ansaugrohr (3), oder aus der Temperatur ($T_{c2}$) heraus durchgeführt wird, die in dem Wasserkreislauf des wassergekühlten Lufttauschers (6) und durch die Kenntnis der Effizienz des Tauschers genommen wird.

7. Verfahren nach einem der Ansprüche 1 bis 6, **dadurch gekennzeichnet, dass** man die Temperatur ($T_{c1}$) in dem Ansaugrohr (3) und die Temperatur ($T_{c2}$) in dem Wasserkreislauf des wassergekühlten Lufttauschers (6) misst, und dadurch, dass die Effizienz des wassergekühlten Lufttauschers (6) aus diesen beiden Temperaturen ($T_{c1}$ und $T_{c2}$) bewertet wird.

8. Vorrichtung, die das Verfahren nach einem der Ansprüche 1 bis 7 zur Bestimmung der Massenströmungsrate ($D_1$) von in das Ansaugrohr (3) eines Innenverbrennungsmotors (2) eintretender Frischluft anwendet, der mit einem Umwälzkreislauf der Abgase (10) des Motors (2) in dem Ansaugrohr (3) ausgestattet ist, wobei der Umwälzkreislauf der Abgase (10) mit einem Regelventil der recycelten Gase (11) ausgestattet ist, wobei das Ansaugrohr (3) einen wassergekühlten Lufttauscher (6) integriert und sich stromaufwärts des Ansaugrohrs (3) ein Regelventil für die Strömung der in das Ansaugrohr (3) eintretenden Gase (14) befindet, **dadurch gekennzeichnet, dass** sie mindestens Folgendes umfasst:

   - Mittel zum Bestimmen der Massenströmungsrate ($D_2$) der in das Ansaugrohr (3) eintretenden recycelten Gase,
   - Mittel zum Bestimmen der Temperatur ($T_A$) der Gase stromaufwärts des Regelventils (14) der in das Ansaugrohr (3) eintretenden Gase,
   - Mittel zum Bestimmen des Drucks ($P_A$) der Gase stromaufwärts des Regelventils (14) der in das Ansaugrohr (3) eintretenden Gase,
   - Mittel zum Bestimmen des Drucks ($P_B$) der Gase stromabwärts des Regelventils (14) der Strömung der in das Ansaugrohr (3) eintretenden Gase,
   - Mittel zum Bestimmen der Massenströmungsrate ($D_3$) von in das Ansaugrohr (3) eintretenden recycelten Gasen und Frischluft durch Anwenden der folgenden Formel:

$$D_3 = Qth = S \cdot \frac{Pa}{\sqrt{rTa}} \sqrt{\frac{2\gamma}{\gamma - 1}\left[\left(\frac{Pb}{Pa}\right)^{\frac{2}{\gamma}} - \left(\frac{Pb}{Pa}\right)^{\frac{\gamma+1}{\gamma}}\right]}$$

wo S der Durchgangsquerschnitt der Gase im Bereich des Regelventils (14) ist,
$T_A$ die Temperatur der Gase stromaufwärts des Regelventils (14) der in das Ansaugrohr (3) eintretenden Gase ist,
$P_A$ der Druck der Gase stromaufwärts des Regelventils (14) der in das Ansaugrohr (3) eintretenden Gase ist,
$P_B$ der Druck der Gase stromaufwärts des Regelventils (14) der Strömung der in das Ansaugrohr (3) eintretenden Gase ist,
r die Konstante der Gase ist,
$\gamma$ das Gamma der Gase ist, und

- Mittel zum Bestimmen der Massenströmungsrate ($D_1$) von in das Ansaugrohr (3) eintretender Luft auf Grundlage der Differenz zwischen der in dem vorstehenden Schritt bestimmten Massenströmungsrate ($D_3$) von in das Ansaugrohr (3) eintretendem Gas und der in dem ersten Schritt bestimmten Massenströmungsrate ($D_2$) von in das Ansaugrohr (3) eintretendem recyceltem Gas.

9.  Vorrichtung nach Anspruch 8, **dadurch gekennzeichnet, dass** die Mittel zum Bestimmen des Drucks ($P_b$) der Gase stromabwärts des Regelventils (14) der in das Ansaugrohr () eintretenden Gase Folgendes umfassen:

- Mittel zum Bestimmen des Drucks ($P_c$) in dem Ansaugrohr (3)
- Mittel zum Bestimmen des durch den wassergekühlten Lufttauscher (6) induzierten Druckverlustes ($\Delta P_D$), und
- Mittel zum Bestimmen des Drucks ($P_b$) der Gase stromabwärts des Regelventils (14) durch Addieren des Drucks ($P_c$) in dem Ansaugrohr (3) und des durch den wassergekühlten Lufttauscher (6) induzierten Druckverlustes ($\Delta P_D$).

10. Vorrichtung nach Anspruch 9, **dadurch gekennzeichnet, dass** sie Folgendes beinhaltet:

- ein Thermoelement (16) zum Bestimmen der Temperatur ($T_a$) der Gase stromaufwärts des Regelventils (14) der in das Ansaugrohr (3) eintretenden Gase,
- einen Drucksensor (17) zum Bestimmen des Drucks ($P_a$) der Gase stromaufwärts des Regelventils (14) der in das Ansaugrohr (3) eintretenden Gasströmung,
- einen Drucksensor (19) zum Bestimmen des Drucks ($P_b$) der in das Ansaugrohr (3) eintretenden Gase,

und dadurch, dass die Entwicklung des durch den wassergekühlten Lufttauscher (6) induzierten Druckverlustes ($\Delta P_D$) kartographiert wird.

11. Vorrichtung nach einem der Ansprüche 8 bis 10, **dadurch gekennzeichnet, dass** die Mittel, die das Bestimmen der Massenströmungsrate der in das Ansaugrohr (3) eintretenden recycelten Gase Folgendes beinhalten:

- Mittel zum Bestimmen (16) der Temperatur ($T_E$) der Gase stromaufwärts des Regelventils der recycelten Gase (11),
- Mittel zum Bestimmen des Drucks ($P_E$) der Gase stromaufwärts des Regelventils der recycelten Gase (11),
- Mittel zum Bestimmen (17) des Drucks ($P_F$) der Gase stromabwärts des Regelventils der recycelten Gase (11),
- Mittel zum Bestimmen der Massenströmungsrate ($D_2$) der recycelten Gase durch Anwenden der folgenden Formel:

$$\mathrm{D}_2 = Qegr = S . \frac{Pe}{\sqrt{rTe}} \sqrt{\frac{2\gamma}{\gamma-1}\left[\left(\frac{Pf}{Pe}\right)^{\frac{2}{\gamma}} - \left(\frac{Pf}{Pe}\right)^{\frac{\gamma+1}{\gamma}}\right]}$$

wo S der Durchgangsquerschnitt der Gase im Bereich des Regelventils der recycelten Gase (11) ist,
$T_e$ die Temperatur der Gase stromaufwärts des Regelventils der recycelten Gase (11) ist,
$P_e$ der Druck der Gase stromaufwärts des Regelventils der recycelten Gase (11) ist,
$P_f$ der Druck der Gase stromabwärts des Regelventils der recycelten Gase (11) ist,
r die Konstante der Gase ist,
$\gamma$ das Gamma der Gase ist.

12. Vorrichtung nach Anspruch 11, **dadurch gekennzeichnet, dass** die Mittel zum Bestimmen des Drucks ($P_e$) der Gase stromaufwärts des Regelventils der recycelten Gase (11) mindestens Folgendes beinhalten:

- Mittel zum Bestimmen der Druckdifferenz ($\Delta P_G$) an den Klemmen des Regelventils der recycelten Gase (11), und
- Mittel zum Bestimmen des Drucks ($P_e$) der Gase stromaufwärts des Regelventils der recycelten Gase (11) durch Addieren des Drucks ($P_f$) der Gase stromabwärts des Regelventils der recycelten Gase (11) und der Druckdifferenz ($\Delta P_G$) an den Klemmen des Regelventils der recycelten Gase (11).

13. Vorrichtung nach Anspruch 12, **dadurch gekennzeichnet, dass** sie mindestens Folgendes beinhaltet:

- ein Thermoelement (16) stromaufwärts des Regelventils (14) der Strömungen der recycelten Gase zum Bestimmen der Temperatur ($T_e$) der Gase stromaufwärts des Regelventils der recycelten Gase (11),
- einen Drucksensor (17) stromabwärts des Regelventils (11) der Strömungen recycelter Gase zum Bestimmen des Drucks ($P_f$) der Gase stromabwärts des Regelventils der recycelten Gase (11), und
- einen Sensor für die Druckdifferenz ($\Delta P_G$) an den Klemmen des Regelventils (11) der Strömungen recycelter Gase.

14. Vorrichtung nach einem der Ansprüche 8 bis 13, **dadurch gekennzeichnet, dass** sie weiter Folgendes beinhaltet:

- einen Temperatursensor (21) zum Bestimmen der Temperatur ($T_c$) in dem Ansaugrohr (3),
- Mittel zum Bestimmen der Masse der Gase in dem Ansaugrohr (3) durch Anwenden des perfekten Gasgesetzes

$$P_cV_c=nRTc$$

Wo $P_c$ der Druck ($P_c$) in dem Ansaugrohr (3) ist,
$V_c$ das Volumen des Ansaugrohrs (3) ist,
n die Materialmenge in dem Ansaugrohr (3) ist,
R die Konstante der perfekten Gase ist, und
$T_c$ die Temperatur in dem Ansaugrohr (3) ist,
und durch Ableiten der Masse der Gase in dem Ansaugrohr aus der Materialmenge (n) in dem Ansaugrohr (3).

**Claims**

1. A method for determining the mass flow rate ($D_1$) of fresh air entering the intake manifold (3) of an internal combustion engine (2) equipped with an exhaust gas recirculation circuit (10) of the engine (2) in said intake manifold (3), which recirculation circuit (10) is equipped with a recycled gas regulating valve (11), which intake manifold (3) incorporates a water-cooled air exchanger (6) and upstream of which intake manifold (3) there is a valve (14) for regulating the flow rate of the gases entering said intake manifold (3), **characterised in that it** comprises at least the steps of:

- determining the mass flow rate ($D_2$) of the recycled gases entering the intake manifold (3), and
- determining the mass flow rate ($D_3$) of the recycled gases and fresh air entering the intake manifold (3) comprising the steps of:

• determining the temperature ($T_A$) of the gases upstream of the valve (14) for regulating the gases entering the intake manifold (3),
• determining the pressure ($P_A$) of the gases upstream the valve (14) for regulating the gases entering the intake manifold (3),
• determining the pressure ($P_B$) of the gases downstream of the valve (14) for regulating the flow rate of the gases entering the intake manifold (3),
• applying the following formula:

$$D_3 = Qth = S.\frac{Pa}{\sqrt{rTa}}\sqrt{\frac{2\gamma}{\gamma-1}\left[\left(\frac{Pb}{Pa}\right)^{\frac{2}{\gamma}} - \left(\frac{Pb}{Pa}\right)^{\frac{\gamma+1}{\gamma}}\right]}$$

Where S is the gas passage section at the valve (14) for regulating the flow rate of the gases entering the intake manifold (3),

$T_a$ is the temperature of the gases upstream of the valve (14) for regulating the gases entering the intake manifold (3)

$P_a$ is the pressure of the gases upstream of the valve (14) for regulating the gases entering the intake manifold (3),

$P_b$ is the pressure of the gases downstream of the valve (14) for regulating the gases entering the intake manifold (3),

r is the gas constant,

$\gamma$ is the gas gamma, and

- determining the mass flow rate of air (Di) entering the intake manifold (3) by difference between the mass flow rate of gas ($D_3$) entering the intake manifold (3) determined in the previous step and the mass flow rate of the recycled gas ($D_2$) entering the intake manifold (3) determined during the first step.

2. The method according to claim 1, **characterised in that** the step of determining the pressure ($P_B$) of the gases downstream of the valve (14) for regulating the gases entering the intake manifold (3) comprises at least the steps of:

- determining the pressure ($P_c$) in the intake manifold (3)
- determining the pressure drop ($\Delta P_D$) induced by the water-cooled air exchanger (6), and
- determining the pressure ($P_B$) of the gases downstream of the regulating valve (14) by adding the pressure ($P_c$) in the intake manifold (3) and the pressure drop ($\Delta P_D$) induced by the water-cooled air exchanger (6).

3. The method according to any one of claims 1 and 2, **characterised in that** the step of determining the mass flow rate ($D_2$) of the recycled gases entering the intake manifold (3) includes at least the steps of:

- determining the temperature ($T_E$) of the gases upstream of the recycled gas regulating valve (11),
- determining the pressure ($P_E$) of the gases upstream of the recycled gas regulating valve (11),
- determining the pressure ($P_F$) of the gases downstream of the recycled gas regulating valve (11),
- applying the following formula:

$$D_2 = Qegr = S. \frac{Pe}{\sqrt{rTe}} \sqrt{\frac{2\gamma}{\gamma - 1} \left[ \left(\frac{Pf}{Pe}\right)^{\frac{2}{\gamma}} - \left(\frac{Pf}{Pe}\right)^{\frac{\gamma+1}{\gamma}} \right]}$$

Where S is the gas passage section at the recycled gas regulating valve (11),

$T_e$ is the temperature of the gases upstream of the recycled gas regulating valve (11),

$P_e$ is the pressure of the gases upstream of the recycled gas regulating valve (11),

$P_f$ is the pressure gases downstream of the recycled gas regulating valve (11),

r is the gas constant

$\gamma$ is the gas gamma.

4. The method according to claim 3, **characterised in that** determining the pressure ($P_e$) of the gases upstream of the recycled gas regulating valve (11) comprises at least the steps of:

- determining the pressure ($P_f$) downstream of the recycled gas regulating valve (11),
- determining the pressure difference ($\Delta P_G$) across the recycled gas regulating valve (11), and
- determining the pressure ($P_e$) of the gases upstream of the recycled gas regulating valve (11) by adding the pressure ($P_f$) downstream of the recycled gas regulating valve (11) and the pressure difference ($\Delta P_G$) across the recycled gas regulating valve (11).

5. The method according to any one of the preceding claims, **characterised in that** the mass of gases in the intake manifold is further determined by applying the ideal gas law

$$P_cV_c = nRT_c$$

Where $P_c$ is the pressure in the intake manifold (3),
$V_c$ is the volume of the intake manifold (3),
n is the amount of material in the intake manifold (3),
R is the ideal gas constant, and
$T_c$ is an evaluation of the temperature in the intake manifold (3),
and **in that** the mass of gases in the intake manifold is deduced from the amount of material (n) in the intake manifold (3).

6.   The method according to claim 5, **characterised in that** the evaluation of the temperature ($T_c$) in the intake manifold (3) is performed either by measuring the temperature ($T_{c1}$) in the intake manifold (3), or from the temperature ($T_{c2}$) taken in the water circuit of the water-cooled air exchanger (6) and by knowing the efficiency of the exchanger.

7.   The method according to any one of claims 1 to 6, **characterised in that** the temperature ($T_{c1}$) in the intake manifold (3) and the temperature ($T_{c2}$) in the water circuit of the water-cooled air exchanger (6) are measured, and **in that** the efficiency of the water-cooled air exchanger (6) is evaluated from these two temperatures ($T_{c1}$ and $T_{c2}$).

8.   A device implementing the method according to any one of claims 1 to 7 for determining the mass flow rate ($D_1$) of fresh air entering the intake manifold (3) of an internal combustion engine (2) equipped with an exhaust gas recirculation circuit (10) of the engine (2) in said intake manifold (3), which recirculation circuit (10) is equipped with a recycled gas regulating valve (11), which intake manifold (3) incorporates a water-cooled air exchanger (6) and upstream of which intake manifold (3) there is a valve (14) for regulating the gases entering said intake manifold (3), **characterised in that** it includes at least:

- means for determining the mass flow rate of the recycled gases ($D_2$) entering the intake manifold (3),
- means for determining the temperature ($T_A$) of the gases upstream of the valve (14) for regulating the gases entering the intake manifold (3),
- means for determining the pressure ($P_A$) of the gases upstream of the valve (14) for regulating the gases entering the intake manifold (3),
- means for determining the pressure ($P_B$) of the gases downstream of the valve (14) for regulating the flow rate of the gases entering the intake manifold (3),
- means for determining the mass flow rate ($D_3$) of recycled gas and fresh air entering the intake manifold (3) by applying the following formula:

$$D_3 = Qth = S.\frac{Pa}{\sqrt{rTa}}\sqrt{\frac{2\gamma}{\gamma-1}\left[\left(\frac{Pb}{Pa}\right)^{\frac{2}{\gamma}} - \left(\frac{Pb}{Pa}\right)^{\frac{\gamma+1}{\gamma}}\right]}$$

Where S is the gas passage section at the regulating valve (14),
$T_A$ is the temperature of the gases upstream of the valve (14) for regulating the gases entering the intake manifold (3),
$P_A$ is the pressure of gases upstream of the valve (14) for regulating the gases entering the intake manifold (3),
$P_B$ is the pressure of gases upstream of the valve (14) for regulating the flow rate of the gases entering the intake manifold (3),
r is the gas constant,
$\gamma$ is the gas gamma, and

- means for determining the mass flow rate of air ($D_1$) entering the intake manifold (3) by difference between the mass flow rate of gas ($D_3$) entering the intake manifold (3) determined in the previous step and the mass flow rate of recycled gas ($D_2$) entering the intake manifold (3) determined during the first step.

**9.** The device according to claim 8, **characterised in that** the means for determining the pressure ($P_b$) of the gases downstream of the valve (14) for regulating the gases entering the intake manifold (3) comprise:

- means for determining the pressure ($P_c$) in the intake manifold (3),
- means for determining the pressure drop ($\Delta P_D$) induced by the water-cooled air exchanger (6), and
- means for determining the pressure ($P_b$) of the gases downstream of the regulating valve (14) by adding the pressure ($P_c$) in the intake manifold (3) and the pressure drop ($\Delta P_D$) induced by the water-cooled air exchanger (6).

**10.** The device according to claim 9, **characterised in that** it includes:

- a thermocouple (16) for determining the temperature ($T_a$) of the gases upstream of the valve (14) for regulating the gases entering the intake manifold (3),
- a pressure sensor (17) for determining the pressure ($P_a$) of the gases upstream of the valve (14) for regulating the flow rate of the gas entering the intake manifold (3),
- a pressure sensor (19) for determining the pressure ($P_b$) of the gases in the intake manifold (3),

and **in that** the evolution of the pressure drop ($\Delta P_D$) induced by the water-cooled air exchanger (6) is mapped.

**11.** The device according to any one of claims 8 to 10, **characterised in that** the means allowing the determination of the mass flow rate of the recycled gases entering the intake manifold (3) include:

- means for determining (16) the temperature ($T_E$) of the gases upstream of the recycled gas regulating valve (11),
- means for determining the pressure ($P_E$) of the gases upstream of the recycled gas regulating valve (11),
- means for determining (17) the pressure ($P_F$) of the gases downstream of the recycled gas regulating valve (11),
- means for determining the mass flow rate ($D_2$) of the recycled gases by applying the following formula:

$$D_2 = Qegr = S.\frac{Pe}{\sqrt{rTe}}\sqrt{\frac{2\gamma}{\gamma - 1}\left[\left(\frac{Pf}{Pe}\right)^{\frac{2}{\gamma}} - \left(\frac{Pf}{Pe}\right)^{\frac{\gamma+1}{\gamma}}\right]}$$

Where S is the gas passage section at the recycled gas regulating valve (11),
$T_e$ is the temperature of the gases upstream of the recycled gas regulating valve (11),
$P_e$ is the pressure of the gases upstream of the recycled gas regulating valve (11)
$P_f$ is the pressure of the gases downstream of the recycled gas regulating valve (11),
r is the gas constant,
$\gamma$ is the gas gamma.

**12.** The device according to claim 11, **characterised in that** the means for determining the pressure ($P_e$) of the gases upstream of the recycled gas regulating valve (11) include at least:

- means for determining the pressure difference ($\Delta P_G$) across the recycled gas regulating valve (11), and
- means for determining the pressure ($P_e$) of the gases upstream of the recycled gas regulating valve (11) by adding the pressure ($P_f$) of the gases downstream of the recycled gas regulating valve (11) and the pressure difference ($\Delta P_G$) across the recycled gas regulating valve (11) .

**13.** The device according to claim 12, **characterised in that** it includes at least:

- a thermocouple (16) upstream of the valve (14) for regulating the flow rates of the recycled gases to determine the temperature ($T_e$) of the gases upstream of the recycled gas regulating valve (11),
- a pressure sensor (17) downstream of the valve (11) for regulating the flow rates of the recycled gases to determine the pressure ($P_f$) of the gases downstream of the recycled gas regulating valve (11), and
- a pressure difference sensor ($\Delta P_G$) across the valve (11) for regulating the flow rates of the recycled gases.

**14.** The device according to any one of claims 8 to 13, **characterised in that** it further includes:

- a temperature sensor (21) for determining the temperature ($T_c$) in the intake manifold (3),
- means for determining the mass of gases in the intake manifold (3) by applying the ideal gas law

$$P_c V_c = nRT_c$$

Where $P_c$ is the pressure ($P_c$) in the intake manifold (3),
$V_c$ is the volume of the intake manifold (3),
n is the amount of material in the intake manifold (3),
R is the ideal gas constant, and
$T_c$ is the temperature in the intake manifold (3),
and deducing the mass of gases in the intake manifold from the amount of material (n) in the intake manifold (3).

Figure unique

**EP 2 619 431 B1**

## RÉFÉRENCES CITÉES DANS LA DESCRIPTION

### Documents brevets cités dans la description

- WO 2010010246 A2
- US 2008208432 A1